# EUROPEAN PATENT APPLICATION

(11) **EP 3 009 009 A1**
(43) Date of publication of application: **20.04.2016**
(21) Application number: 14782779.4
(22) Date of filing: 12.03.2014
(51) Int. Cl.: A23L 17/10, A22C 25/00, A23B 4/03, A47J 27/026, B02C 2/08, F26B 11/06

(54) **METHOD AND DEVICE FOR PROCESSING FISH MEAL FOR DIRECT HUMAN CONSUMPTION**

(30) Priority: 11.04.2013 PE 0008352013
(71) Applicant: Mandriotti Castro, Giovanni Néstor, Callao 01 (PE)
(72) Inventor: Mandriotti Castro, Giovanni Néstor, Callao 01 (PE)
(74) Representative: Buceta Facorro, Luis
(86) International application number: PCT/PE2014/000002
(87) International publication number: WO 2014/168494

(57) **Abstract**

The invention relates to a method for producing fish meal for direct human consumption that requires an integral processor device comprising a horizontal cylindrical stator having a steam jacket and containing a rotor formed by a central tubular shaft through which steam enters, said rotor being divided into two heating zones, namely a first zone in which the fish meal is cooked and a second zone in which the dehydration operation is performed. The cooking, flavouring and dehydrating process is partially controlled using the steam pressure in the rotor and the gate valve of the product discharge chamber. The operation is easy and allows the evaporation capacity and the percentage of water in the product to be adjusted within the required limits. The device also comprises a gearbox and an electric motor. Flavouring is performed during the entire fish meal production process and the ingredients are fed into the device through metering units located on the upper part of same. The flavouring agents used are natural and provide the fish meal with a flavour that is appealing to the human palate and easy to digest.

## Description

### TECHNICAL FIELD

The invention relates to a method for producing fish meal for direct human consumption with a high fish protein and essential (omega) fatty acid content. This process is performed through steps which mainly include an integral processor device in which the cooking-flavouring and dehydrating process is performed, making fish meal for direct consumption as it is easy to digest and is acceptable to the human palate.

### OBJECT OF THE INVENTION

The object of the invention is to provide a method and an integral device for producing fish meal for direct human consumption. This method and device cannot be found on the market and provide novel essential features, given that up until now only methods and devices for processing fish meal for indirect human consumption are known.

With this method, the raw material (fish) is cooked, flavoured and dehydrated in the integral processor device until it turns into meal with a high fish (anchovy) protein and omega content, obtaining in a single process a dry meal with respect to the moisture at the point of sale; the method of the invention furthermore allows the meal to be flavoured in said device so that it is suitable for direct human consumption.

### PRIOR ART

Conventional processing to produce fish meal for indirect human consumption contemplates the following steps: unloading and receiving the raw material for subsequent cooking, draining, pressing; solids are separated in this step and centrifuged so that oil is released and separated out into a storage tank. After pressing the already cooked and pressed fish, the primary and secondary drying step is performed, followed by cooling, purification, milling and packaging, the product being ready for storage. Unlike the conventional technique, the present invention allows carrying out the cooking, flavouring and dehydrating processes on the fish in one and the same device without removing the liquid and fat from the fish itself; this allows the meal (end product) to have a high fish protein and essential fatty acid content for human beings; said meal can also be consumed directly since it is flavoured.

Today as regards devices for processing fish meal for indirect human consumption that are known on the market, such devices only process fish by separating solid parts from liquid parts, the meal and oil being obtained separately, and they use additional devices such as presses, solids separators, centrifuges and evaporation plants. These conventional devices extract oil as a by-product and the proteins and fatty acids of the soluble solids obtained are broken down through treatment in evaporators, causing the meal to lose quality. Furthermore, the oil is released to the outside as a by-product with a high cost for the general population.

In the conventional process for producing fish meal for indirect human consumption, large amounts of essential fatty acids are lost due to the separation of solids and liquids; furthermore the number of additional processes in different devices can generate protein loss in the solids; this creates two different products, protein (solids) on one hand and oil with fatty acids (liquids) on the other.

In a conventional device for producing fish meal for indirect human consumption, fish kept in pools is first processed in a continuous cooker, then conveyed to cylindrical strainers to separate the solid from the liquid; it subsequently goes through presses to continue separating the solid from the liquid. The separated solids are pooled together so that they can be fed into steam or hot air driers. The separated liquids go through solids separators and then through centrifuges to separate the oil. The residual liquid with soluble solids is concentrated by evaporation and said concentrate is added to the solids fed into the drier. Fish meal which is stripped of a large part of fatty acids and proteins is stored and sold as animal feed.

Another difference with the present invention is that the proposed method allows fish stored in the metering hopper to be fed into the device through an inlet mouth in which the flavouring ingredients are metered according to the fish feeding flow, the fish and flavouring ingredients being fed together into the cooking step, in which blades for moving the product back and forth assure a continuous movement and mixture homogenization; the product is dehydrated thereafter in the same device to obtain the meal. In summary, the device included in the present invention combines everything and generate an end product, i.e., flavoured fish meal for direct human consumption, which preserves the proteins and fatty acids during fish meal processing, generating a nutritive product for direct consumption that is appealing to the human palate and has a low production cost in relation to the nutritional goodness of the product.

Likewise, there are other devices on the market that perform other different roles such as the fish meal drier for drying fish meal for indirect human consumption, having a double-laminated heating disc and the discs thereof being formed in a monolithic manner. Each disc consists of an intermediate layer formed by bending two sheets with respect to one another, and the steam enters the intermediate layer through a steam inlet so that the heating disc heats up uniformly and can effectively improve the drying of the fish meal. The processor device included in the present invention differs from the fish meal drier for drying fish meal for indirect human consumption because the integral processor device for producing fish meal for direct human consumption comprises, in addition to the drying discs, a bundle of concentric tubes, at one of the ends of which blades for lifting the material (meal) being processed are installed to improve heat transfer and thus obtain the product at the required moisture; however, the fish meal drier is only provided with a double-laminateddisc.

### DISCLOSURE OF THE INVENTION

In order to overcome the drawbacks mentioned above, the present process and device integrating cooking, flavouring and dehydrating processes in a single device is developed, which allows producing naturally flavoured fish meal with proteins and fatty acids for direct human consumption, obtaining about 60% protein and 100% fatty acids per 100 grams of fish meal because they are not lost in the process, as described in detail in the following paragraphs.

Generally, the fish is unloaded, received and stored to be transferred thereafter to the processor device for subsequent cooking, flavouring and dehydration to obtain fish meal. Optionally, the fish can go through a cooler and other complementary devices such as a mill, for packaging and storage.

The device in turn comprises a horizontal cylindrical stator having at its ends two circular front covers, said casing having on the outside thereof a steam jacket in the lower part and registers or windows in the upper part; these registers provide access to the inner part of the device in which there is located the rotor formed by a central tubular shaft through which steam enters and spreads to two heating zones. The rotor is supported by journal bearings and bearings. The rotor consists of a first zone in which the fish meal is cooked and flavoured, which first zone is formed by hollow discs parallel to one another and perpendicular to the shaft, with blades at the ends that move back and forth and scrapers between the discs that do not touch the shaft, and a second zone in which the dehydration operation is performed, said second zone is formed by concentric tubes parallel to the shaft that are fixed to two circular plates at their ends and a support plate with said tubes going through it, there being arranged between the support plate and the fixing plate lifting blades for lifting the material in the dehydrating process in order to improve heat transfer and thus obtain the product at the required moisture.

The steam produced by the fish in the cooking and dehydrating process is fed into a steam evacuation chamber and is extracted with a steam extractor fan, which are components of the stator, in addition to the scrapers or plates adhered on the inner walls of the stator.

Flavouring is performed using natural ingredients such as algarrobina, white vinegar, white wine and others, which can also be combined and the proportions of which vary according to the product that is produced with the meal, for example, biscuits, pastas, breads, seasonings, etc.

Processing to produce fish meal for direct human consumption comprises the following steps:

### a) UNLOADING, RECEIVING AND STORING FISH

The fish is unloaded from a platform floating on water (float) into the freezing plant, where the fish is conveyed using submarine pipes and unloaded into a static dewatering unit to separate the water it contains as conveyance means (pumping water). The fish free of water is driven by belt conveyors and weighed on a continuous balance to be stored thereafter in a plastic container (Dinos) and transferred to the fish storage hopper in the processing bay for processing meal for direct human consumption.

### b) COOKING-FLAVOURING AND DEHYDRATING

This is performed in a first zone from the feeding mouth up to the last disc and said first zone consists of hollow discs parallel and perpendicular to the shaft; these discs have a blade at their ends for moving the product back and forth, assuring homogenous heat transfer and movement. A row of scrapers is fixed at the upper end of the stator to shred the fish and keep the discs clean. Flavouring is performed by metering the ingredients from a tank by means of a metering pump.

Dehydrating is performed in a second heating zone from the deflector separating the discs from the tubes up to the discharge mouth and said second zone is formed by concentric tubes parallel to the central shaft and at the end of which there are installed lifting blades for lifting the material being processed.

### c) COOLING (a complementary step)

The dehydrated fish meal is conveyed using screw conveyors and delivered to the rotary cooler which uses air from the environment drawn in by an exhauster and the air, in contact with the dehydrated meal that heats up to 60°C, causes the meal to cool down to a temperature of 30°C.

The meal which is obtained at this point is already a first product; however, for commercial purposes, a hammer mill such as that mentioned below is optionally used; the fish meal for direct human consumption is transferred to a hammer mill to improve its level of refinement; the meal must be milled and the degree of grain size distribution must be such that 90% of the milled meal must go through a fine No. 200 mesh to be collected thereafter in a conveyor that leads to a metering hopper in which the process is completed by adding antioxidant for preservation.

It must be pointed out that water vapour from the fish cooking and dehydrating process is extracted out of the device using a fan for being condensed thereafter and thus preventing environmental contamination.

The cooking, flavouring and dehydrating process is partially controlled using the steam pressure in the rotor and the gate valve of the product discharge chamber, resulting in a simple operation which allows the evaporation capacity and about 75% water in the product to be adjusted within strict limits.

The cooking-flavouring and dehydrating processes are combined in the processor device to prevent the loss of protein and fatty acids and to obtain the end product, i.e., flavoured fish meal for direct human consumption with a high protein and essential fatty acid content, making obtaining a highly nutritive product at a low financial cost for the end consumer more efficient.

### BRIEF DESCRIPTION OF THE DRAWINGS

Figure 1 shows a flowchart of the method for producing fish meal for direct human consumption.

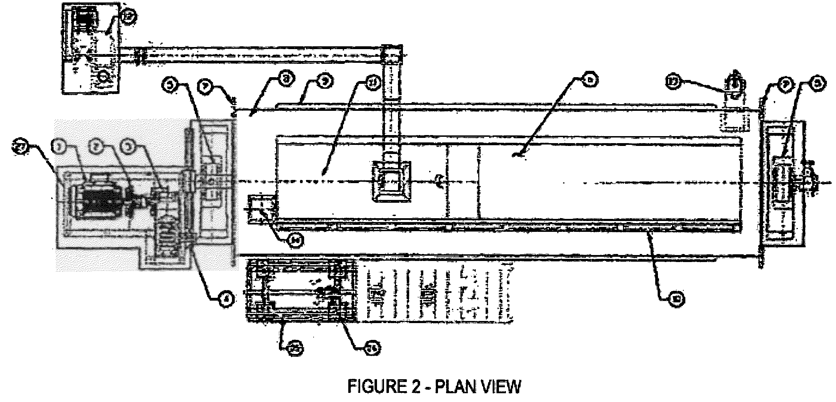

Figure 2 shows a plan view with the identification of parts of the integral processor device for producing fish meal for direct human consumption.

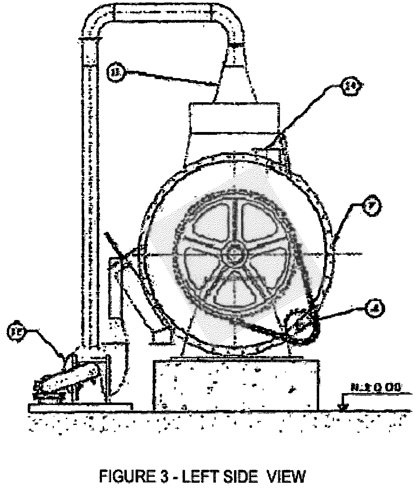

Figure 3 shows a left side view with the identification of parts of the integral processor device for producing fish meal for direct human consumption.

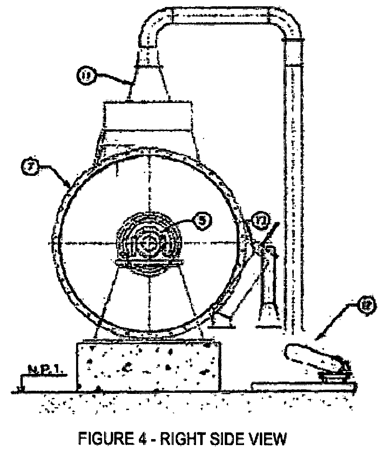

Figure 4 shows a right side view with the identification of parts of the integral processor device for producing fish meal for direct human consumption.

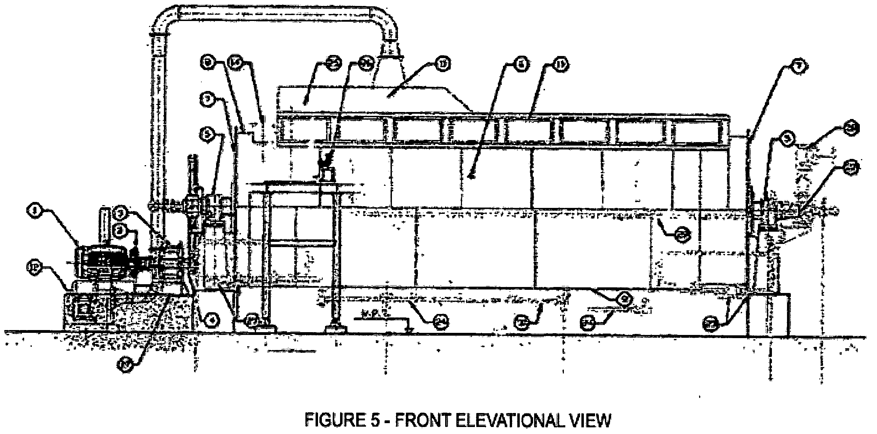

Figure 5 shows a front elevational view with the identification of parts of the integral processor device for producing fish meal for direct human consumption.

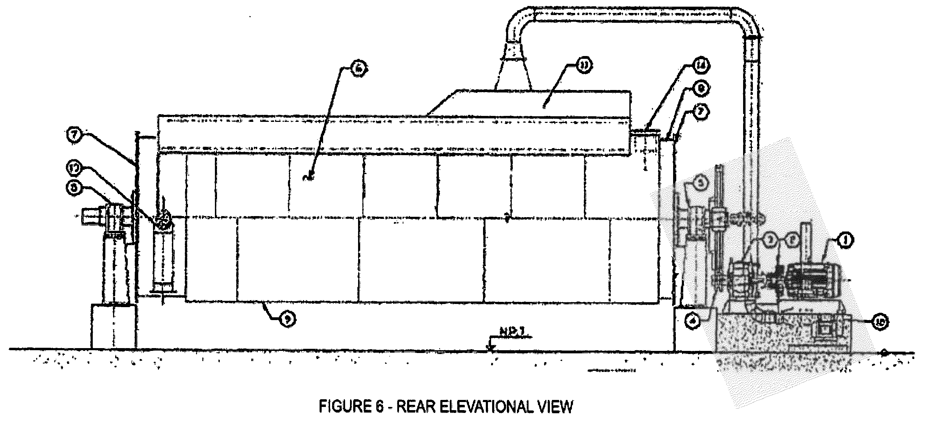

Figure 6 is a rear elevational view with the identification of parts of the integral processor device for producing fish meal for direct human consumption.

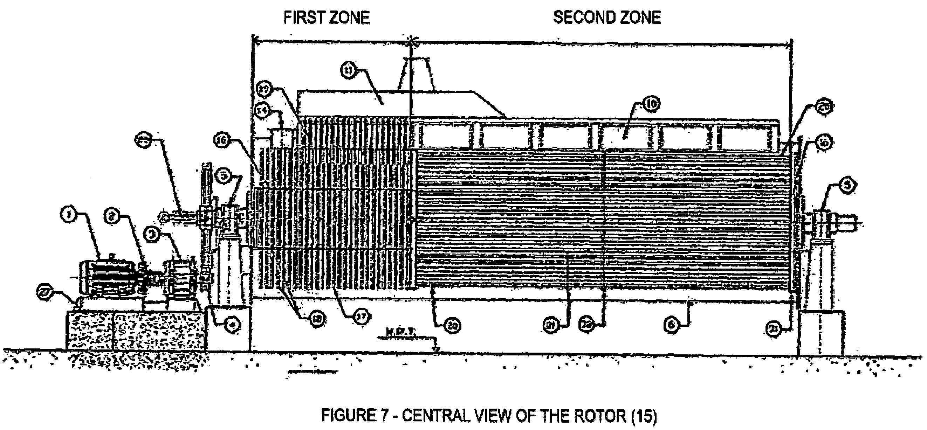

Figure 7 shows a central view of the rotor with the identification of parts of the integral processor device for producing fish meal for direct human consumption.

### DETAILED DISCLOSURE OF THE INVENTION

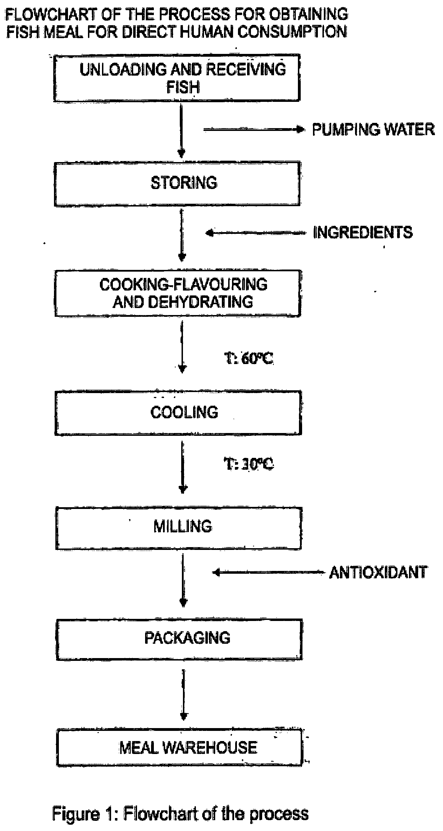

The method for producing fish meal for direct human consumption consists of the following steps (see Figure 1):

### A) UNLOADING AND RECEIVING THE RAW MATERIAL

The raw material from various vessels is conveyed and unloaded into the factory by means of a vacuum pumping device with water at 0°C, driving the fish through an HDPE (high-density polyethylene) pipe 16" in diameter. The pump is located on a floating platform referred to as "float" about 500 meters from the shore.

The fish is received in the freezing plant and reaches a static dewatering unit, the function of which is to separate the water used in delivering the fish (pumping water). The fish free of water is driven by thermoplastic conveyor belts and weighed on a continuous flow balance.

The fish is then transferred into 0.5 m³ plastic containers with covers referred to as Dinos in order to convey the fish to the processing bay for processing it for direct human consumption.

### B) STORING

The fish received in Dinos is conveyed using a hoist and stored in a hopper having an inclined bottom at atmospheric pressure and at 16°C.

### C) COOKING-FLAVOURING AND DEHYDRATING

Cooking and flavouring of the fish are performed in the first heating zone from the feeding mouth up to the last disc and said first zone is formed by hollow discs parallel to one another and perpendicular to the central steam shaft; there are blades at the ends of the discs for moving the fish back and forth assuring homogenous heat transfer and movement.

A row of scrapers between the discs is fixed at the upper end of the stator to shred the fish and keep the discs clean.

Cooking is subjected to heating at a temperature of 95°C - 100°C using steam at a pressure of 4 bar (400 kPa) to 6 bar 600 (kPa), which is distributed from between the discs; these hot surfaces contact the fish load.

Flavouring is performed by metering the ingredients from a tank by means of a metering pump.

Dehydrating of the already cooked and flavoured fish is performed in the second heating zone from the deflecting plate separating the discs from the concentric tubes up to the regulable discharge mouth and said second zone is formed by concentric tubes parallel to the central steam shaft and at the end of which blades for lifting the material being processed are installed to improve heat transfer. Heating is performed with steam at a pressure of 6 bar (600 kPa). The dehydrated meal coming out of the device contains 8% moisture and a temperature of 60°C. The purpose of this device is to perform cooking, flavouring and dehydrating to reduce the moisture of the fish until turning it into meal with 8% moisture. High levels of residual water which allow microorganism growth are thereby prevented and the residence time thereof is 70 minutes.

For this step of the process, the present invention provides an integral processor device for producing fish meal for direct human consumption as described below:
a) a stator (6) formed by a cylindrical casing (8) having at its ends 2 circular covers (7), said casing having a steam jacket (9) in the outer and lower part of the casing; windows or registers (10) in the outer and upper part of the casing to access the inside of the device and perform cleaning or maintenance tasks, a steam evacuation chamber (11) extracting water vapour dehydrated from the fish, having a steam extractor-fan or exhauster (12) and scrapers or plates (19) adhered on the inner walls of the stator.
b) the rotor (15) is formed by a central tubular shaft (16) where the steam enters and has 2 heating zones. Specifically, the steam can be distributed to both zones and the rotor is supported by journal bearings and bearings (5).

First zone: This is the zone in which the fish is cooked and flavoured. Said zone is formed by hollow discs (17) parallel to one another and perpendicular to the central shaft (16); these discs have blades (18) at their ends for moving the fish back and forth assuring an efficient movement and increasing efficiency when cooking the fish.

A row of 25 scrapers (19) are fixed at the upper end of the stator and they are located between the discs without touching the central shaft and are used to shred the fish and keep the discs clean. It uses saturated steam at 80 PSI of pressure as heating means and the fish is cooked in a temperature range of 95 to 100°C.

Flavouring is performed by metering the ingredients from a stainless steel tank (25) and by means of a metering pump (26); the calculated flow rate of the ingredients is regulated according to the fish feeding flow rate, and it is located next to the fish feeding mouth (14).

Second zone: This is the zone in which the dehydration operation is performed. It is formed by 260 concentric tubes (20) parallel to the central shaft (16); the tubes are fixed to 2 circular plates (31) at their ends and there is installed in the central part of said tubes a circular support plate (32) with the tubes going or passing through it to align them along the entire length thereof.

Lifting blades (21) which are used to stir the bottom and lift the shredded fish and distribute it between the tubes uniformly to thereby perform the dehydration process are located between the fixing plate and support plate; it thereby improves heat transfer and granulated meal at the required moisture is obtained.

Specifically, the steam is supplied to the central tubular shaft through a steam joint (22) and is distributed from the inside thereof towards the discs and tubes. The already condensed steam is carried to the rear part of the shaft where it is extracted through a condensate discharge pipe (24), going through a system of steam traps and filters (23).

Feeding of the raw material is performed through an inlet mouth (14) located in the upper part of the device and discharge of the dehydrated product is regulated with a blade-type gate (13) discharging the product at the required moisture.

The dehydrated fish is conveyed using screw conveyors and delivered to the rotary cooler which uses air from the environment drawn in by an exhauster and, in contact with the dehydrated product, causes cooling to a temperature of 30°C to take place. The product is then transferred to a hammer mill for breaking it down and turning it into flavoured fish meal with protein and omega for direct human consumption, which fish meal is collected in a conveyor that leads to a metering hopper.

Water vapour dehydrated from the fish is extracted out of the device using a fan for being condensed thereafter and thus preventing environmental contamination. A cylindrical condenser will be installed in cascade and it condenses steam coming out said device in countercurrent with the cooling water.

The device also comprises a high-resistance transmission system and a smooth device start-up, consisting of an electric motor (1), a direct Falk coupling (2), a Sew Eurodrive reducer (3), a drive pinion (4), transmission system support plates (27), a valve regulating the feeding of steam into the central shaft (28), a valve regulating the feeding of steam into the jacket of the stator (29), and a steam trap at the condensate outlet of the jacket (30).

### D) COOLING THE MEAL

This device works to lower the temperature of the meal from 60°C to 30°C. This consists of a rotating cylinder with blades therein and it recirculates air by means of an exhauster-cyclone and discharges hot air into the environment.

Two steps of the process for obtaining meal with a smaller particle size are described as a complement.

### E) MILLING

This is the step through which a suitable grain size distribution of the meal is obtained. It is formed by a hammer mill rotating at a high speed crushing the meal to the desired grain size distribution.

The preferably broken down meal goes through mesh No. 200 in an amount of 90% with respect to the total milled meal.

### F) PACKAGING

This is the step in which antioxidant is added to provide stability to fat with respect to the environment: moisture-oxygen. The antioxidant referred to as DECANOX MTS - 70 is a mixture of tocopherols approved for direct human consumption.

The product is packaged in 25 kg bags each.

### TECHNICAL ADVANTAGES OF THE PROCESS FOR OBTAINING FISH MEAL FOR DIRECT HUMAN CONSUMPTION

- Producing fish meal for direct human consumption
- A simpler process as there are fewer operating procedures.
- The device of the invention groups 3 operations into a single operation.
- The process uses fewer devices for obtaining the final meal and consumes less energy, steam and water.

### EMBODIMENT

To carry out the description of the present invention, the following embodiment is carried out which can be susceptible to modifications without this entailing any alteration whatsoever of the basis of the invention, being able to affect the shape, size and materials for construction.

**TECHNICAL SPECIFICATIONS**

| | |
|---|---|
| 1. Heating surface: | |
| Stator | 36.00 m² |
| Rotor. Zone of the discs | 165.00 m² |
| Zone Tubular | 230.00 m² |
| Total heating surface | 431.00 m² |
| | |
| 2. Total weight of the device | 40.00 tons |
| | |
| 3. Rotational speed | 15 RPM |
| | |
| 4. General Dimensions | |
| - Length x Width x Height | 11300 x 2520 x 3650 mm |
| - Motor | 75 Kw |
| - Maximum steam pressure | 7.00 bar |
| - Maximum steam temperature | 170 C |
| - Chain transmission | 3" double |
| | |
| 4.1. Stator: | |
| Inner diameter | 2500 mm |
| Inner length | 8720 mm |
| Inlet mouth | 500 x 400 mm |
| Outlet mouth | 400 x 300 mm |
| | |
| 4.2. Rotor: | |
| Diameter | 2200 mm |
| Disc zone: Amount | 26 units |
| Spacing | 100 mm |
| Thickness | 30 mm |
| Length | 2750 mm |
| Material | 304 stainless steel |
| | |
| Tube zone: Amount | 260 units |
| Diameter | 2" |
| Length | 5500 mm |
| Material | 304 stainless steel |
| | |
| 4.3. Central steam shaft: Diameter | 900 mm |
| Length | 8720 mm |
| | |
| 4.4. Auxiliary elements: Johnson joint for the entry of steam and exit of condensate Upper gates for inspection Steam extractor fan | |

Fish (anchovy) meal for direct human consumption was produced following the method proposed in the present invention (see Figure 1), which was subjected to analysis with the Instituto Tecnológico Pesquero - ITP which resulted in Pesquera Capricornio obtaining a "prime meal" that is easy to digest and appealing to the human palate. The following agreements were thus entered into:
Through an agreement with the ITP, fish meal was produced and flavoured for direct human consumption.

The agreement with Beneficencia Pública del Callao, in which 700 protein breads were consumed daily for 8 months in soup kitchens.

The agreement with Club Deportivo Cantolao, managing a cafeteria for 3 years with children from 8 to 18 years old, carrying out tests relating to acceptability and sport performance, which gave extremely favourable results.
- Universidad Cayetano Heredia Dr. Roberto Acicineli Tanaka - Director of the Programa de Altura of said university and its medical team, the final report is enclosed.
- Agreement with Beneficencia Pública del Callao, study conducted in 7 soup kitchens for 8 months, testing protein bread and Peruvian fish soup.
- Agreement with Club Deportivo Cantolao for tests relating to sports and digestibility; the tests are being conducted for 3 years in a permanent cafeteria.
- Presentation in Mistura (Peruvian food festival) with an ITP stand to present and to allow attendees to sample the goodness of the product; 5,000 end products such as biscuits, chocolates, sweet cookies were sampled for a product digestibility study, products produced with the meal of the invention obtaining a high percentage of market acceptance and digestibility.

## Claims

1. A method for producing fish meal for direct human consumption of the type comprising the steps of:
a. unloading the raw material (fish) from various vessels into a factory by means of a vacuum pumping device and water at 0°C, such that the fish is driven along with water through a high-density polyethylene pipe,
b. receiving the raw material (fish) in a freezing plant of the factory, until reaching a static dewatering unit, the function of which is to separate the fish from the water used during unloading or pumping,
subsequently transferring the raw material into 0.5 m³ plastic containers with covers referred to as Dinos so that it can be conveyed to the processing bay for processing same for human consumption by means of a hoist for subsequently storing same in a tank having an inclined bottom,
**characterized in that** said method includes the steps of:
c. cooking, flavouring and dehydrating the raw material in a single cooking, flavouring and dehydrating device, by means of transferring said raw material from the storage tank having a capacity of 10 m³ to the cooking-flavouring-dehydrating device by means of screw conveyors, wherein:
- flavouring is performed by means of adding flavouring ingredients into the device along with the feeding of the raw material,
- cooking of the fish is performed in a temperature range between 95°C to 100°C, using saturated steam at a pressure of 400 kPa (4 bar) to 600 kPa (6 bar), which is distributed from the central steam shaft towards the discs (17) which contact the fish load,
- dehydrating is performed in concentric tubes at a pressure of 600 kPa, where heat is transferred through said tubes, such that fish meal with 8% moisture at a temperature of 60°C is obtained, the residence time in the device being 70 minutes; and
d. cooling the fish meal from 60° to 30°C in a rotary cooler.

2. The method according to claim 1, **characterized in that** in order to obtain a meal with a smaller particle size the following steps are furthermore included:
e. milling the fish meal to obtain a suitable grain size distribution (90% of the milled meal must go through a No. 200 mesh) by means of a hammer mill; and
f. packaging the fish meal in bags after adding tocopherol as an antioxidant agent.

3. The method according to claims 1 and 2, **characterized in that** the flavouring ingredients comprise white wine and algarrobina.

4. A device for cooking, flavouring, dehydrating fish used for carrying out the method according to claims 1 to 3, **characterized in that** it comprises the following elements:
- a stator (6) formed by a cylindrical casing (8) having at its ends 2 circular covers (7), said casing having a steam jacket (9) in the outer and lower part of the casing; windows or registers (10) in the outer and upper part of the casing; a steam evacuation chamber (11) having a steam extractor-fan (12) and scrapers or plates (19) adhered on the inner walls of the stator.
- a rotor (15) formed by a tubular shaft (16) having 2 heating zones
a first zone formed by hollow discs (17) parallel to one another and perpendicular to the central shaft (16), where said discs have at their ends blades (18) for moving the cooked fish back and forth, the scrapers (19) being arranged between the discs without touching the shaft (16); and
a second zone formed by concentric tubes (20) parallel to the shaft (16) where said tubes are fixed to 2 circular plates (31) at their ends, whereas in the central part of the tubes (20) there is placed a support plate (32) with the tubes going or passing through it; lifting blades (21) being arranged between the support plate and the fixing plates.

5. The device according to claim 4, **characterized in that** the second zone preferably has 260 concentric tubes parallel to the shaft (20).

6. The device according to claims 4 and 5, **characterized in that** said device for cooking, flavouring and dehydrating furthermore has a high-resistance transmission system and a smooth device start-up, consisting of an electric motor (1); a direct Falk coupling (2), a Sew Eurodrive reducer (3), a drive pinion (4), transmission system support plates (27), a valve regulating the feeding of steam into the central shaft (28), a valve regulating the feeding of steam into the jacket of the stator (29), and a steam trap at the condensate outlet of the jacket (30).
